(19) **Europäisches Patentamt**

**European Patent Office**

**Office européen des brevets**

(11) Veröffentlichungsnummer: **0 296 676 B1**

(12) **EUROPÄISCHE PATENTSCHRIFT**

(45) Veröffentlichungstag der Patentschrift: **31.03.93**

(21) Anmeldenummer: **88201247.9**

(22) Anmeldetag: **17.06.88**

(51) Int. Cl.⁵: **G02F 1/09**, G02F 1/095

(54) **Nichtreziprokes optisches Bauelement, insbesondere zur Verwendung als Isolator oder Zirkulator.**

(30) Priorität: **25.06.87 DE 3720929**

(43) Veröffentlichungstag der Anmeldung:
**28.12.88 Patentblatt 88/52**

(45) Bekanntmachung des Hinweises auf die
Patenterteilung:
**31.03.93 Patentblatt 93/13**

(84) Benannte Vertragsstaaten:
**DE FR GB IT SE**

(56) Entgegenhaltungen:
**US-A- 3 990 777**

**JOURNAL OF LIGHTWAVE TECHNOLOGY, Band LT-4, Nr. 7, Juli 1986, Seiten 711-714, IEEE, New York, Us; Y. OKAMURA et al.: "Nonreciprocal propagation in magnetooptic YIG rib waveguides"**

**APPLIED OPTICS, Band 23, Nr. 11, 1. Juni 1984, Seiten 1886-1889; Y. OKAMURA et al.: "Integrated optical isolator and circulator using nonreciprocal phase shifters: a proposal"**

**PATENT ABSTRACTS OF JAPAN, Band 6, Nr. 53 (P-109)[931], 8. April 1982;& JP-A-56 168**

625

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**FR GB IT SE**

(72) Erfinder: **Schmitt, Hans Jürgen, Prof. Dr.**
**Hangst. 34**
**W-5100 Aachen(DE)**
Erfinder: **Dammann, Hans, Dr.**
**Eichenstrasse 27**
**W-2081 Tangstedt(DE)**

(74) Vertreter: **Koch, Ingo, Dr.-Ing. et al**
**Philips Patentverwaltung GmbH Wendenstrasse 35 Postfach 10 51 49**
**W-2000 Hamburg 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein nichtreziprokes optisches Bauelement, insbesondere zur Verwendung als Isolator oder Zirkulator, welches mit mindestens zwei einmodigen optischen Wellenleitern verbunden ist und welches eine magnetooptische Wellenleiterstruktur aufweist, welche durch ein senkrecht zur Ausbreitungsrichtung der opti-schen Welle gerichtetes transversales magneti-sches Feld beaufschlagt ist.

Bekannt ist ein solcher, in optischer Streifenleitung aufgebauter "differential phase shift" Zirkulator/Isolator durch "Applied Optics", Band 23, 1984, Seiten 1886 bis 1889. Dabei wird die einfallende Lichtwelle stets in zwei gleiche Teile aufgespalten, wozu Y-Koppler oder hybride Koppler verwendet werden. Die beiden Teilwellen durchlaufen verschiedene parallele Kanäle der magnetooptischen Wellenleiterstruktur, welche so aufgebaut ist, daß am Eingang des zweiten Kopplers ein optischer Gangunterschied von λ/4 entsteht, welcher einem Phasenunterschied von $\pi$/2 entspricht. Zu-sätzlich werden durch entsprechende transversale Magnetfelder nichtreziproke Phasenverschiebungen in den beiden Kanälen von - $\pi$/4 bzw. + $\pi$/4 er-zeugt, so daß für eine Lichtrichtung der eingebaute optische Phasenunterschied von $\pi$/2 gerade kom-pensiert, für die entgegengesetzte Lichtrichtung je-doch zu $\pi$ ergänzt wird. Je nach Anordnung der Wellenleiter und Koppler lassen sich nach diesem Prinzip Isolatoren und Zirkulatoren aufbauen.

Die bekannte Anordnung ist aufwendig und hat insbesondere eine relativ große Baulänge, bedingt durch zwei separate Koppler (Y oder Hybrid), welche mit der magnetooptischen Wellenleiterstruktur verbunden werden müssen. Es entstehen hohe Verluste.

Der Erfindung liegt die Aufgabe zugrunde, die Anordnung der eingangs genannten Art zu vereinfachen.

Die Lösung gelingt durch folgende Merkmale:

- Die magnetooptische Wellenleiterstruktur ist als mehrmodiger Wellenleiter ausgebildet, welcher zumindest eine Grundmode und die Mode erster Ordnung führen kann,
- die optischen Wellenleiter sind außermittig an die Wellenleiterstruktur angeschlossen,
- die Abmessungen und/oder die Querschnittsverteilung des Brechungsindex der optischen Wellenleiterstruktur sind derart gewählt, daß die beiden Moden einen reziproken Phasen-unterschied von $\pi$/2 + 2 n$\pi$ erfahren,
- die magnetische Feldstärke und/oder der Strukturaufbau der magnetooptischen Wellenleiterstruktur sind derart gewählt, daß die bei-den Moden einen nichtreziproken Phasenun-terschied von $\pi$/2 + 2 m$\pi$ erfahren.

Erfindungsgemäß werden die Funktionen des Kopplers und des Phasenschiebers zusammengefaßt, wodurch Verbindungsleitungen entfallen.

Eine selektive Anpassung des nichtreziproken Phasenunterschiedes ist einerseits durch die magnetische Feldstärke ermöglicht. Ein weiteres vorteilhaftes Mittel ist dadurch gekennzeichnet, daß auf die magnetooptische Wellenleiterstruktur eine senkrecht zur Ausbreitungsrichtung der optischen Welle wirkende mechanische Spannung aufgebracht ist. Vorzugsweise besteht die magnetooptische Wellenleiterstruktur aus Yttrium-Eisen-Granat (YIG).

Gemäß einer vorteilhaften Ausführungsform ist vorgesehen, daß die magnetooptische Wellenleiterstruktur auf einer Substratebene aufgebracht ist und etwa die zweifache Breite der mit ihr verbundenen einmodigen optischen Wellenleiter aufweist.

Die Herstellung der erfindungsgemäßen Anordnung durch kristallines Aufwachsen auf ein Substrat ist besonders einfach, wenn die magnetooptische Wellenleiterstruktur auf das Substrat mit einer Höhe aufgebracht ist, welche etwa der doppelten Höhe der mit ihr verbundenen einmodigen optischen Wellenleiter entspricht.

Bei der Ausführung als Zirkulator ist die optische Wellenleiterstruktur beidseitig mit je zwei einmodigen optischen Wellenleiter verbunden. Bei einer Ausführung als Isolator ist in bevorzugter Weise vorgesehen, daß die optische Wellenleiterstruktur an jeder Seite mit einem einmodigen optischen Wellenleiter verbunden ist, welche im wesentlichen eine Randhälfte der Querschnittsfläche der magnetooptischen Wellenleiterstruktur abdecken, während die verbleibenden Querschnittsflächen mit einer absorbierenden Schicht (optischer Sumpf) versehen sind.

Eine bevorzugte Lösung ist dadurch gekennzeichnet, daß im mittleren Bereich der Quer-schnittsfläche der magnetooptischen Wellenleiter-struktur eine zu den benachbarten Randbereichen unterschiedliche Dotierung vorgenommen ist, um dort mit selektiver Wirkung auf die Grundmode den Brechungsindex und/oder die magnetooptische Konstante zu ändern.

Die Erfindung wird anhand der Beschreibung von in der Zeichnung schematisch dargestellten vorteilhaften Ausführungsbeispielen näher erläutert.

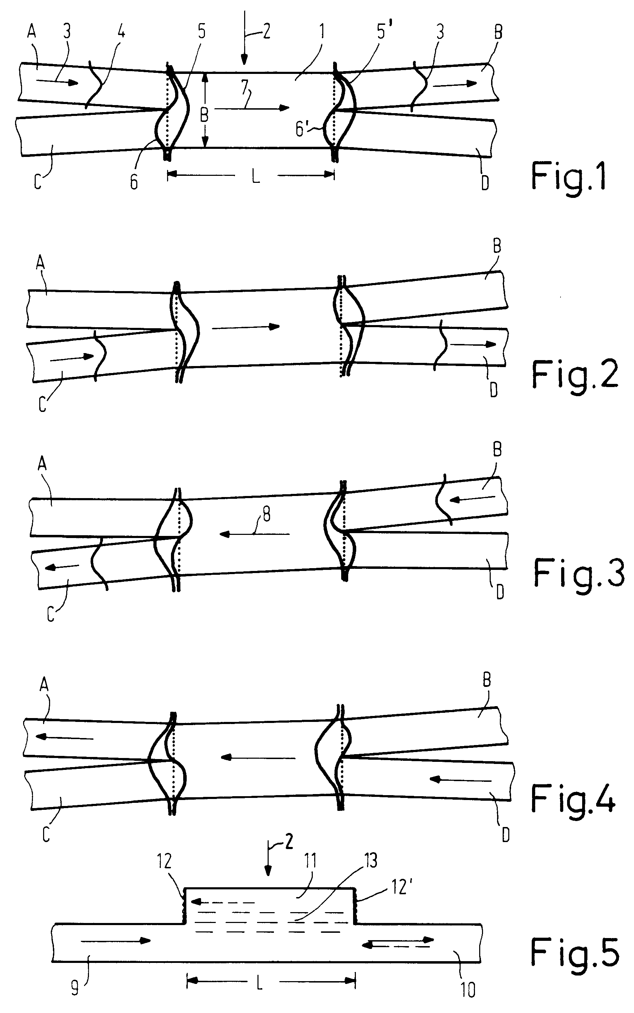

Die Figuren 1 bis 4
zeigen vier verschiedene Betriebsarten eines erfindungsgemäß aufgebauten Zirkulators.
Figur 5
zeigt eine abgewandelte Ausführung einer erfindungsgemäßen Anordnung in der Ausbildung als Isolator.

In den Figuren 1 bis 4 sind mit A, B, C und D jeweils einmodische optische Streifenwellenleiter bezeichnet, welche paarweise an beiden Seiten einer magnetooptischen Wellenleiterstruktur 1 angebracht sind. Die Wellenleiter A bis D und die magnetooptische Wellenleiterstruktur 1 sind auf eine in der Papierebene liegende Fläche einer Substratschicht durch kristallines Aufwachsen aufgebracht. Die Wellenleiter A bis D bestehen insbesondere aus in bekannter Weise dotiertem $SiO_2$, dessen Brechungsindix geringfügig größer als derjenige des umgebenden Mediums ist. Auch der Brechungsindix der magnetooptischen Wellenleiterstruktur, welche vorzugsweise aus Yttrium-Eisen-Granat (YIG) besteht, ist geringfügig größer als derjenige des umgebenden Mediums. Als umgebendes Medium kann auch Luft dienen.

In Pfeilrichtung 2 wirkt ein magnetisches Feld auf die magnetooptische Wellenleiterstrukur. Dadurch werden die Geschwindigkeiten einer optischen Welle in einer Richtung verzögert und in der anderen Richtung beschleunigt, so daß sich ein nichtreziprokes Verhalten ergibt.

Die Abmessung L und B der magnetooptischen Wellenleiterstruktur sowie der Unterschied ihres Brechungsindix relativ zum Wert des Umgebungsmediums sind derart gewählt, daß außer der Grundmode mindestens eine weitere, vorzugsweise nur die nächsthöhere Mode, zusätzlich geführt werden kann.

Eine im Wellenleiter A in Richtung des Pfeils 3 ankommende linear polarisierte optische Welle 4 in Form einer TM-Mode regt beim Eintreffen in der magnetooptischen Wellenleiterstruktur nicht nur eine Grundmode 5 mit größerer Feldweite an, sondern zusätzlich mindestens auch eine Mode 6 nächsthöherer Ordnungszahl.

In den Figuren 1 bis 4 sind die Feldverläufe der Moden (Gaußsche Wellen) schematisch und nicht maßstäblich angedeutet. Dadurch können insbesondere die relativen Feldverläufe an den jeweils punktiert gezeichneten Eingangs- bzw. Ausgangsflächen der magnetooptischen Wellenleiterstruktur 1 verdeutlicht werden.

In Figur 1 kommen beide Moden 5 und 6 mit gleicher relativer Feldverteilung am Austrittsende der magnetooptischen Wellenleiterstruktur 1 als Moden $5'$ bzw. $6'$ an, so daß nur im Wellenleiter B eine Mode $3'$ weitergeleitet wird, während die Wellenleiter C und D praktisch feldfrei sind, weil an deren Eingangsflächen das aus den beiden Moden 5 und 6 bzw. $5'$ und $6'$ resultierende Feld praktisch "Null" ist. Diese Wirkung ergibt sich aufgrund der erfindungsgemäßen Dimensionierung der magnetooptischen Wellenleiterstruktur 1. Durch Wahl der Abmessungen L und B sowie der Brechzahldifferenz zum Außenmedium ergeben sich einerseits für die beiden Moden 5 und 6 verschiedene Geschwindigkeiten, die über die Länge L einen Phasenunterschied von $+ (\frac{\pi}{2} + 2 n\pi)$ ergeben, wobei n eine ganze Zahl einschließlich 0 ist.

Dieser Effekt ist reziprok, d.h. unabhängig von der Richtung der optischen Welle. Zusätzlich bewirkt das magnetische Feld 2 , daß die beiden in Richtung des Pfeils 7 fortschreitenden Moden 5 und 6 einen nichtreziproken Phasenunterschied von $- (\frac{\pi}{2} + 2 m\pi)$ erfahren, wobei m eine ganze Zahl einschließlich 0 ist. Nichtreziprok bedeutet, daß das Vorzeichen dieses Phasenunterschiedes in Gegenrichtung umgekehrt ist, so daß sich dann ein nichtreziproker Phasenunterschied von $+ (\frac{\pi}{2} + 2 m \cdot \pi)$ ergibt.

Im Falle der Figur 1 ergibt sich als resultierender Phasenunterschied

$$+ (\frac{\pi}{2} + 2 n \cdot \pi) - (\frac{\pi}{2} + 2 m \cdot \pi) = 2 (n-m) \cdot \pi,$$

so daß die relative Feldverteilung der beiden Moden 5 und 6 am Anfang und am Ende der magnetooptischen Wellenleiterstruktur 1 gleich ist. Das gilt in strengem Sinn für eine ganz bestimmte Wellenlänge der optischen Wellen. Für andere Wellenlänge müßten beispielsweise entsprechend geänderte angepaßte Längen L gewählt werden.

Analog zu Figur 1 ergibt sich für Fig. 2, daß bei Einspeisung einer polarisierten optischen Welle in den einmodigen Wellenleiter C nur eine Welle im Wellenleiter D weitergeleitet wird. Bei Einleitung einer optischen Welle in den Wellenleiter B nach Fig. 3 oder D nach Fig. 4 tritt diese aus den überkreuzt gegenüberliegenden Wellenleitern C bzw. A aus. Gegenüber den Figuren 1 und 2 ist nämlich die Richtung 8 der optischen Welle in der magnetooptischen Wellenleiterstruktur 1 umgekehrt, so daß der resultierende Phasenunterschied zwischen den beiden Moden nunmehr

$$+ (\frac{\pi}{2} + 2n\pi) + (\frac{\pi}{2} + 2m\pi) = \pi + 2 (n+m) \cdot \pi$$

beträgt.

Deshalb ist die relative Feldverteilung am Anfang und am Ende der magnetooptischen Wellenleiterstruktur 1 in der in den Figuren 3 und 4 angedeuteten Weise unterschiedlich.

Der in den Figuren 1 bis 4 schematisch dargestellte Zirkulator ist beispielsweise zur Anwendung für ein Rückstreumeßgerät (OTDR) zur Dämpfungsmessung von LWL geeignet. Beispielsweise kann an den Wellenleiter B der zu messende LWL angekoppelt werden. Laserlicht wird in den Wellenleiter A geleitet und gelangt von dort gemäß Figur 1 über den Wellenleiter B in den LWL. Aus dem LWL in den Wellenleiter B zurückgestreutes Licht gelangt gemäß Fig. 3 über den Wellenleiter C in einen optischen Detektor. In den Laser gelangt dagegen kein Störlicht, da im Wellenleiter A nahezu kein vom Rückstreulicht erzeugtes Feld angeregt wird.

Zirkulatoren können in üblicher Weise auch als optische Isolatoren verwendet werden, wie es in Fig. 5 angedeutet ist.

Eine Isolatorwirkung ergibt sich auch, wenn die Wellenleiter C und D in Fig. 1 bzw. die Wellenleiter A und B in Fig. 2 jeweils durch absorbierende Beschichtungen der magnetooptischen Wellenleiterstruktur 1 ersetzt werden. Ein Lichtdurchgang ist dann jeweils von links nach rechts, also in Pfeilrichtung 7, aber nicht in Gegenrichtung von rechts nach links, also in Pfeilrichtung 8, möglich.

Bei der in Fig. 5 dargestellten Anordnung sind die einmodigen Wellenleiter 9 und 10 sowie die magnetooptische Wellenleiterstruktur 11 auf eine senkrecht zur Papierebene verlaufende Substratfläche durch kristallines Aufwachsen aufgebracht. Ansonsten ergibt sich eine gleiche physikalische Wirkung wie bei der in den Fig. 1 bis 4 dargestellten Anordnung.

Eine in den Wellenleiter 9 geleitete optische Welle wird in den Wellenleiter 10 weitergeleitet. Ein beispielsweise zurückreflektierender Teil dieser Welle (gestrichelte Pfeile) gelangt dagegen nicht in den Wellenleiter 9 (vergleichbar Fig. 4) zurück, sondern wird von der als optischer Sumpf wirkenden Schicht 12 absorbiert. Ein solcher Isolator könnte vorteilhaft zwischen den Pigtail eines Sendelasers und einen abgehenden LWL geschaltet werden.

In Fig. 5 sind aufgewachsene Schichten 13 angedeutet, deren Brechungsindex und/oder magnetooptische Konstante in diesem mittleren Bereich abweichend von den Werten der benachbarten Bereiche sind. Damit ergibt sich eine Möglichkeit, reziproke und nichtreziproke Phasenunterschiede selektiv für die beiden Moden einzustellen. In diesem mittleren Bereich erfolgende Maßnahmen (Änderung der Dotierung) wirken sich vornehmlich und gezielt auf die Grundmode aus.

Auch bei der Anordnung nach den Fig. 1 bis 4 können im mittleren Bereich der magnetooptischen Wellenleiterstruktur 1 Änderungen des Brechungsindex und/oder der magnetooptischen Konstante in entsprechender Weise vorgesehen werden.

Bei Änderungen der magnetischen Feldstärke verändert sich ausschließlich der Wert des nichtreziproken Phasenunterschiedes, so daß die magnetische Feldstärke bevorzugt zur Justierung geeignet ist. Ein weiteres Mittel zur selektiven Beeinflussung der nichtreziproken Phasenunterschiede ist eine auf die magnetooptische Wellenleiterstruktur 1 oder 11 in Richtung des Pfeils 2 aufgebrachte mechanische Spannung, wie es in Figur 2 der EP-A 25 99 33 dargestellt ist.

Eine Vorausberechnung der Abmessung L und B sowie einer geeigneten Dotierung der magnetooptischen Wellenleiterstruktur 1 bzw. 11 ist nach den durch die einschlägige Literatur bekannten Methoden möglich, wobei iterative Rechenverfahren erforderlich und für derartige Anordnungen üblich sind.

Eine endgültige Optimierung sollte jedoch durch Versuche durchgeführt werden, für welche verschiedene Proben aufzubauen sind, deren Aufbau gegenüber den errechneten Werten variiert wird. Die erforderlichen mathematischen und physikalischen Hilfsmittel und Kenntnisse sind dem Fachmann aus einer Vielzahl von Veröffentlichungen und Lehrbüchern bekannt. Beispielsweise wird auf das Buch "Integrated Optics: Theory and Technology", Berlin, Heidelberg, New York, 1982 und "Applied Optics, Vol. 23, No. 1, 1984 hingewiesen.

## Patentansprüche

1. Nichtreziprokes optisches Bauelement, insbesondere zur Verwendung als Isolator oder Zirkulator, mit mindestens zwei einmodigen optischen Wellenleitern (A,B,C,D,9,10) und einer magnetooptischen Wellenleiterstruktur (1,11), welche durch ein senkrecht zur Ausbreitungsrichtung der optischen Welle gerichtetes transversales magnetisches Feld (2) beaufschlagt und an jedem Ende mit jeweils mindestens einem der Wellenleiter verbunden ist, gekennzeichnet durch folgende Merkmale:

    - die magnetooptische Wellenleiterstruktur (1,11) ist als mehrmodiger Wellenleiter ausgebildet, welcher zumindest eine Grundmode (5) und die Mode erster Ordnung (6) führen kann,
    - die optischen Wellenleiter (A,B,C,D,9,10) sind außermittig an die Wellenleiterstruktur (1,11) angeschlossen,
    - die Abmessungen und/oder die Querschnittsverteilung des Brechungsindex der optischen Wellenleiterstruktur (1,11) sind derart gewählt, daß die beiden Moden (5,6) einen reziproken Phasenunterschied von $\frac{\pi}{2} + 2\,n\pi$ erfahren,
    - die magnetische Feldstärke und/oder der Strukturaufbau der magnetooptischen Wellenleiterstruktur (1,11) sind derart gewählt, daß die beiden Moden einen nichtrezi-proken Phasenunterschied von $\frac{\pi}{2} + 2\,m\pi$ erfahren,

    wobei n und m jeweils ganze Zahlen einschließlich 0 sein können.

2. Bauelement nach Anspruch 1, dadurch gekennzeichnet, daß auf die magnetooptische Wellenleiterstruktur (1,11) eine senkrecht zur Ausbreitungsrichtung der optischen Welle wirkende mechanische Spannung aufgebracht ist.

3. Bauelement nach Anspruch 1 oder 2, dadurch gekennzeichnet, daß die magnetooptische Wellenleiterstruktur (1,11) aus Yttrium-Eisen-Granat (YIG) besteht.

4. Bauelement nach einem der Ansprüche 1 bis 3, dadurch gekennzeichnet, daß die magnetooptische Wellenleiterstruktur (1) auf einer Substratebene aufgebracht ist und etwa die doppelte Breite der mit ihr verbundenen einmodigen optischen Wellenleiter (A,B,C,D) aufweist.

5. Bauelement nach einem der Ansprüche 1 bis 3, dadurch gekennzeichnet, daß die magnetooptische Wellenleiterstruktur (11) auf ein Substrat mit einer Höhe aufgebracht ist, welche etwa der doppelten Höhe der mit ihr verbundenen einmodigen optischen Wellenleiter (9,10) entspricht.

6. Bauelement nach einem der Ansprüche 1 bis 5, dadurch gekennzeichnet, daß die magnetooptische Wellenleiterstruktur (1) in Ausbildung als Zirkulator beidseitig mit je zwei einmodigen optischen Wellenleitern (A,C bzw. B,D) verbunden ist.

7. Bauelement nach einem der Ansprüche 1 bis 5, dadurch gekennzeichnet, daß die magnetooptische Wellenleiterstruktur (11) zur Verwendung als Isolator an jeder Seite mit einem einmodigen optischen Wellenleiter (9,10) verbunden ist, welche im wesentlichen eine Randhälfte der Querschnittsfläche der magnetooptischen Wellenleiterstruktur (11) abdecken, während die verbleibenden Querschnittsflächen mit einer absorbierenden Schicht (12,12') (optischer Sumpf) versehen sind.

8. Bauelement nach einem der Ansprüche 1 bis 7, dadurch gekennzeichnet, daß im mittleren Bereich der Querschnittsfläche der magnetooptischen Wellenleiterstruktur (1,11) eine zu den benachbarten Bereichen unterschiedliche Dotierung vorgenommen ist, um dort den Brechungsindex und/oder die magnetooptische Konstante zu ändern.

## Claims

1. A non-reciprocal optical component, particularly for use as an isolator or circulator, which comprises at least two monomode optical waveguide (A, B, C, D, 9, 10) and a magneto-optical waveguide structure (1,11)which is subjected to a transversal magnetic field (2) directed perpendicularly to the direction of propagation of the optical wave, and which is connected at each end to at least one of the waveguides, characterized by the following features:
   - the magneto-optical waveguide structure (1,11) is formed as a multimode waveguide which can propagate at least one fundamental mode (5) and the first-order mode (6),
   - the optical waveguides (A, B, C, D, 9, 10) are connected off-centre to the waveguide structure (1,11),
   - the dimension and/or the cross-sectional distribution of the refractive index of the optical waveguide structure (1,11) are chosen to be such that the modes (5, 6) have a reciprocal phase difference of $\frac{\pi}{2} + 2n\pi$
   - the magnetic field strength and/or the structural build-up of the magneto-optical waveguide structure (1,11) are chosen to be such that the two modes, (5, 6) have a non-reciprocal phase difference of $\frac{\pi}{2} + 2m\pi$ in which n and m may be integers including O.

2. A component as claimed in Claim 1, characterized in that the magneto-optical waveguide structure (1,11) is subjected to a mechanical stress acting perpendicularly to the direction of propagation of the optical wave.

3. A component as claimed in Claim 1 or 2, characterized in that the magneto-optical waveguide structure (1,11) consists of yttrium iron garnet (YIG).

4. A component as claimed in any one of Claims 1 to 3, characterized in that the magneto-optical waveguide structure (1) is provided on a substrate area and is approximately twice as wide as the monomode optical waveguides (A, B, C, D) connected to it.

5. A component as claimed in any one of Claims 1 to 3, characterized in that the magneto-optical waveguide structure (11) is provided on the substrate with a height corresponding to approximately twice the height of the monomode optical waveguides (9, 10) connected to it.

6. A component as claimed in any one of Claims 1 to 5, characterized in that in the design as a circulator the magneto-optical waveguide structure (1) is bilaterally connected to two monomode optical waveguides each (A, C, and B, D, respectively).

7. A component as claimed in any one of Claims 1 to 5, characterized in that for use as an isolator each side of the magneto-optical waveguide structure (11) is connected to a monomode optical waveguide (9, 10) essentially covering a peripheral half of the cross-sectional area of the magneto-optical waveguide structure (11), whilst the uncovered cross-sectional areas are provided with an absorbing layer (12, 12') (optical waveguide termination).

8. A component as claimed in any one of Claims 1 to 7, characterized in that a doping which is different from that of the neighbouring areas is applied in the central portion of the cross-sectional area of the magneto-optical waveguide structure (1,11) in order to locally vary the refractive index and/or the magneto-optical constant.

**Revendications**

1. Composant optique non réciproque susceptible en particulier d'être utilisé comme isolateur ou circulateur, comportant au moins deux guides d'ondes optiques monomodes (A, B, C, D, 9, 10) et une structure de guide d'ondes magnéto-optiques (1, 11) qui est alimentée par un champ magnétique transversal (2) orienté perpendiculairement à la direction de propagation de l'onde optique et est connectée, à chaque extrémité, respectivement à au moins un des guides d'ondes, caractérisé en ce que :
   - la structure de guide d'ondes magnéto-optiques (1, 11) est conçue comme un guide d'ondes multimode, qui peut guider au moins un mode fondamental (5) et le mode de premier ordre (6),
   - les guides d'ondes optiques (A, B, C, D, 9, 10) sont raccordés en position excentrée à la structure de guide d'ondes,
   - les dimensions et/ou la répartition en coupe transversale de l'indice de réfraction de la structure de guide d'ondes optiques (1, 11) sont choisies de telle sorte que les deux modes (5, 6) accusent une différence de phase réciproque de $\pi/2 + 2\,n\pi$,
   - l'intensité du champ magnétique et/ou la conception de la structure de guide d'ondes (1, 11) magnéto-optiques sont choisies de telle sorte que les deux modes accusent une différence de phase non réciproque de $\pi/2 + 2\,m\pi$, n et m pouvant respectivement être des nombres entiers à l'inclusion de 0.

2. Composant selon la revendication 1, caractérisé en ce qu'on applique sur la structure de guide d'ondes magnéto-optiques (1, 11) une sollicitation mécanique agissant perpendiculairement à la direction de propagation de l'onde optique.

3. Composant selon la revendication 1 ou 2, caractérisé en ce que la structure de guide d'ondes magnéto-optiques (1, 11) est en grenat d'yttrium ferreux (YIG).

4. Composant selon l'une quelconque des revendications 1 à 3, caractérisé en ce que la structure de guide d'ondes magnéto-optiques (1) est agencée sur un plan de support et présente une largeur valant à peu près le double de celle des guides d'ondes optiques monomodes (A, B, C, D) qui y sont raccordés.

5. Composant selon l'une quelconque des revendications 1 à 3, caractérisé en ce que la structure de guide d'ondes magnéto-optiques (11) est appliquée sur un substrat avec une hauteur qui correspond à peu près au double de la hauteur des guides d'ondes optiques monomodes (9, 10) qui y sont raccordés.

6. Composant selon l'une quelconque des revendications 1 à 5, caractérisé en ce que, dans la version de circulateur, la structure de guide d'ondes magnéto-optiques (1) est raccordée des deux côtés, respectivement, à deux guides d'ondes optiques monomodes (A, C ou B, D).

7. Composant selon l'une quelconque des revendications 1 à 5, caractérisé en ce que, dans la version d'isolateur, la structure de guide d'ondes magnéto-optiques (11) est raccordée de chaque côté à un guide d'ondes optiques monomode, chaque guide monomode couvrant en substance une moitié marginale de l'aire en coupe transversale de la structure de guide d'ondes magnéto-optiques (11), tandis que le reste des aires en coupe transversale est doté d'une couche absorbante (12, 12') (puits optique).

8. Composant selon l'une quelconque des revendications 1 à 7, caractérisé en ce que, dans la zone centrale de l'aire en coupe transversale de la structure de guide d'ondes magnéto-optiques (1, 11), il est prévu un dopage différent de celui des zones marginales voisines pour y modifier l'indice de réfraction et/ou la constante magnéto-optique.

EP 0 296 676 B1

Fig.1

Fig.2

Fig.3

Fig.4

Fig.5

8